# EUROPEAN PATENT SPECIFICATION

(11) **EP 0 675 650 B1**
(45) Date of publication and mention of the grant of the patent: **27.02.2002**
(21) Application number: 94105194.8
(22) Date of filing: 31.03.1994
(51) Int. Cl.: H04N 7/087

(54) **A television receiver with teletext function**
Fernsehempfänger mit Teletextfunktion
Récepteur de télévision à fonction de télétexte

(43) Date of publication of application: 04.10.1995
(73) Proprietor: SONY-WEGA PRODUKTIONS GmbH, 70327 Stuttgart (DE)
(72) Inventor: Bobert, Martin, D-71332 Waiblingen (DE)
(74) Representative: Müller . Hoffmann & Partner Patentanwälte

(56) References cited:
- EP-A- 0 536 828
- US-A- 4 520 392
- RADIO FERNSEHEN ELEKTRONIK, vol.40, no.3/4, 1991, BERLIN DD pages 185 - 190, XP226531 U. GODEMANN 'Nachrüstsätze für den Videotextempfang'
- IEEE TRANSACTIONS ON CONSUMER ELECTRONICS, vol.38, no.3, August 1992, NEW YORK US pages 725 - 733, XP311917 J. R. KINGHORN 'Enhanced On-Screen Displays for Simpler TV Control.'
- PATENT ABSTRACTS OF JAPAN vol. 16, no. 280 (E-1221) 23 June 1992 & JP-A-40 070 177 (SHARP) 5 March 1992

## Description

The invention concerns a television receiver with a teletext decoder.

In a conventional television receiver with a teletext decoder, the teletext mode is selected by pressing a teletext ON key provided to a remote controller of the television receiver while a normal video picture of a television program is displayed on a screen of the television receiver (hereinafter TV mode). If the teletext mode is selected, the first page or an index page of the teletext which is transmitted in the television signal of the television program are normally displayed automatically. The user can watch desired pages of the teletext by selecting it by means of either numeral keys or a program up/down key.

Some television receiver offer a user page function for page selection. In the user page function, several page numbers of the teletext can be preset as user pages on a preset table, which will be frequently watched. Afterwards, the user pages of the page numbers preset can be then watched by selecting it on a teletext menu after the teletext mode is selected.

In both cases, teletext pages can be displayed only after the teletext mode is selected. Therefore, if the user wants to watch a certain teletext page during TV mode, the user must always select the teletext mode first, so that the user can not watch the normal video picture during selections of the teletext mode and the desired teletext page number.

Prior art document EP-A-0 536 828 discloses a television receiver. If in this television receiver a user is currently watching a television program, regardless of the channel being watched, when he presses a specific button on a remote control, then a particular teletext page will be displayed on the screen. That page is the one indicated in a row of a first memory, and in an example quoted it is page 100 of the channel identified with the number 1 - what channel this is is determined by the contents of a second memory. The user can then browse through the other teletext pages identified in the first memory by using + and - keys on the remote control.

The present invention provides a television receiver as defined in claim 1.

The invention as claimed is intended to remedy the above-mentioned drawbacks. A television receiver or a remote controller of the television receiver has at least one switch and if the switch is operated during TV mode, a teletext page of a certain page number which was previously preset is searched and displayed on the screen. Therefore, the user need not select the teletext mode manually and can watch the normal video picture during the teletext page is searched until the teletext page is found and displayed.

One way of carrying out the invention is described in detail below with reference to drawings which illustrate only one specific embodiment, in which:
Fig. 1 is a schematic block diagram showing an embodiment of a television receiver in accordance with the invention.
Fig. 2 is a schematic plane view of a remote controller employed for controlling the television receiver shown in Fig. 1.
Fig. 3 is a schematic diagram showing an example of a preset table used for presetting desired teletext pages in the embodiment of a television receiver in accordance with the invention.
Figs. 4A, 4B, 4C and 4D are schematic diagrams showing an example of teletext page selecting operation in the embodiment of a television receiver in accordance with the invention.
Fig. 5 is a flow chart explaining teletext page selecting operation in the embodiment of a television receiver in accordance with the invention.

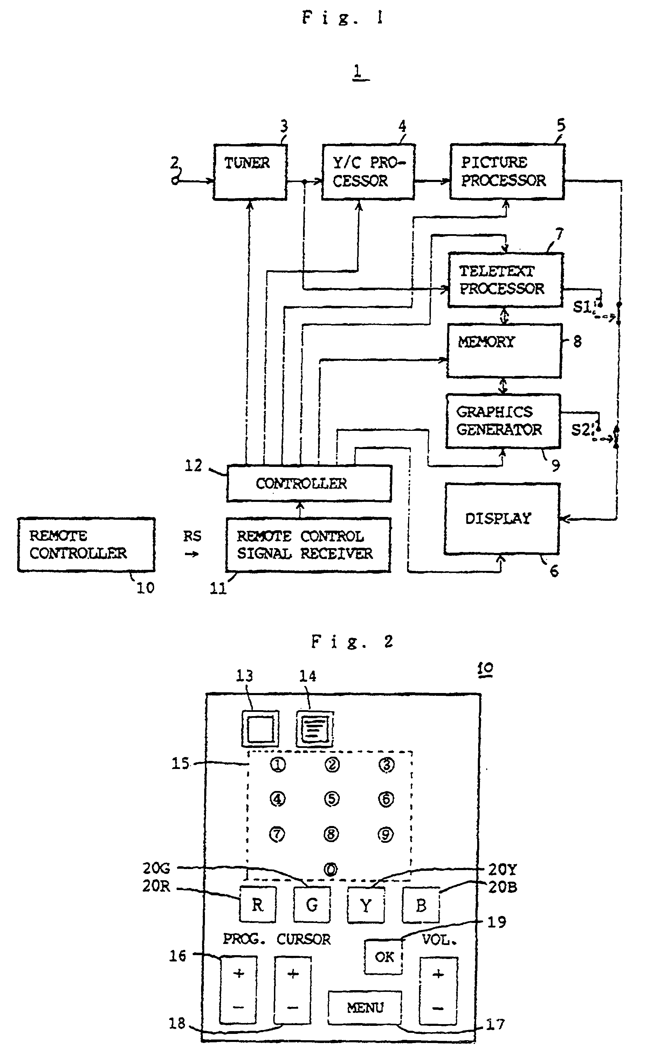

Referring to Fig. 1, an embodiment of the television receiver (hereinafter, TV receiver) 1 according to the invention is now explained. The TV receiver 1 has an antenna input 2, which is connected to a television tuner 3 including the video IF signal demodulator and audio signal demodulator so that a composite video signal and an audio signal are obtained, respectively.

The audio signal is supplied to the sound signal processor (not illustrated) in which the audio signal is subjected to sound processing and derived to built-in speakers or headphones through power amplifiers (also not illustrated).

The composite video signal is supplied to a luminance and chrominance signal processor (hereinafter, Y/C processor) 4 in which the composite video signal is converted to luminance and color difference signals (hereinafter, Y/U/V signals). The Y/U/V signals are provided to a picture processor 5 and subjected to desired adjustments of picture quality and from which video picture signals in the RGB form are supplied through fast switches S1 and S2 to the display device 6.

The composite video signal is also supplied to the teletext processor 7 in which the teletext data signal transmitted during every vertical period of the television signal received at the tuner 3 is extracted and the teletext picture signals in the RGB form are formed according to the extracted teletext data and selectively supplied through the KGB fast switch S1 under the control of a blanking signal accompanying the teletext picture signals and through the RGB fast switch S2 to the display device 6.

In case that the TV receiver 1 has a function of on screen display (hereinafter, OSD) which provides the user with easy control, the graphics generator 8 is provided to generates OSD picture signals in RGB form for displaying and being used for controlling the functions of the TV receiver 1. The OSD picture signals are selectively supplied through the RGB fast switch S2 under the control of a blanking signal accompanying the OSD picture signals to the display device 6.

The respective blanking signals accompanying the respective picture signals controls the RGB fast switches S1 and S2 according to the contents of the pictures so that a normal video picture corresponding to the video picture signals is displayed as the background and a teletext picture and/or a OSD picture corresponding to the teletext picture signals and/or the OSD picture signals are in this order overlayed, in general.

A memory 9 is also provided to store the teletext data and OSD data, if necessary. The teletext processor 7, graphics generator 8 and memory 9, however, may be constructed as an integrated circuit. Furthermore, as a variation, the teletext picture and OSD picture can be produced in a same layer. In this case, the teletext processor 7 is used also as the graphics generator 8 and the RGB fast switch S2 can be ommited.

The TV receiver 1 may be provided with a remote controller 10 and controlled by manipulation thereof. In this case, the TV receiver 1 has a remote control signal receiver 11 for receiving control signals RS from the remote controller 10 so as to decode the remote control signals RS which is supplied to a controller 12 provided for generally controlling TV receiver 1. The controller 12 may be constructed by a micro processor. If the remote controller 10 is not provided, the TV receiver 1 itself has a control panel.

The remote controller 10 has, among others, as shown in Fig. 2, a TV mode ON key 13, a teletext mode ON key 14, ten (10) Keys 15, a program up/down key 16, a menu ON key 17, a cursor up/down key 18 and an OK key 19. In this embodiment, the remote controller 10 has further four colored keys 20R, 20G, 20Y and 20B with red, green, yellow and blue colors, respectively, which are employed for controlling TOP (Table of Pages) teletext or FLOF (Full Level One Feature) teletext which is also called FAST teletext. The TOP or FLOF teletext is very well known in Europe and therefore explanation thereof will be omitted. The remote controller 10 may have other function keys which are not directly related to the invention and therefore the illustration and/or explanation of which will be omitted.

If the TV receiver 1 is in the condition of stand-by, the power is turned on when the TV mode ON key 13 is depressed and a normal video picture of a television program which has been seen before the TV receiver 1 was turned off is displayed on a screen of the display device 6. A desired television program can be select by depressing 10 keys 15 or the program up/down key 16. If the menu ON key 17 is depressed, a menu accompanied with a cursor is displayed on the screen as OSD overlapped on the normal video picture and the operation of the cursor up/down key 18 causes movement of the cusor in the menu. The OK key 19 is used for selection of a desired one item pointed by the cursor. The selection of the item may cause actual control of TV receiver 1 or a display of another menu.

If the teletext mode ON key 14 is depressed during TV mode, the teletext mode is selected and the teletext picture corresponding to the teletext data transmitted in a selected television program is displayed instead of displaying the normal video picture. If the teletext mode ON key 14 is depressed again, the teletext picture can be displayed as superimposed together with the normal video picture. In the teletext mode, any desired but existing page of the teletext can be selected by entering the page number with 10 keys 15. Increment or decrement of page number can be also performed by manipulating the program up/down key 16.

After the teletext picture is displayed, teletext data of, for example, around 100 pages in total preceding and succeeding the presently displayed teletext page and some other pages thematically related to the presently displayed teletext page may be stored in the teletext memory 9. Accordingly, if another page number is selected and teletext data of the selected page number are stored in the teletext memory 9, the selected page can be displayed quickly.

If the menu ON key 17 is depressed during the teletext mode, a teletext menu (not illustrated) is displayed as overlapped with the presently displayed teletext picture. The teletext menu includes several items regarding teletext operations, such as index, selection of enlarged upper half/enlarged lower half/normal size full page display, subtitle, preset user pages, selection of user pages and so on, which can be selected by manipulating the cursor up/down key 18 and subsequently depressing the OK key 19.

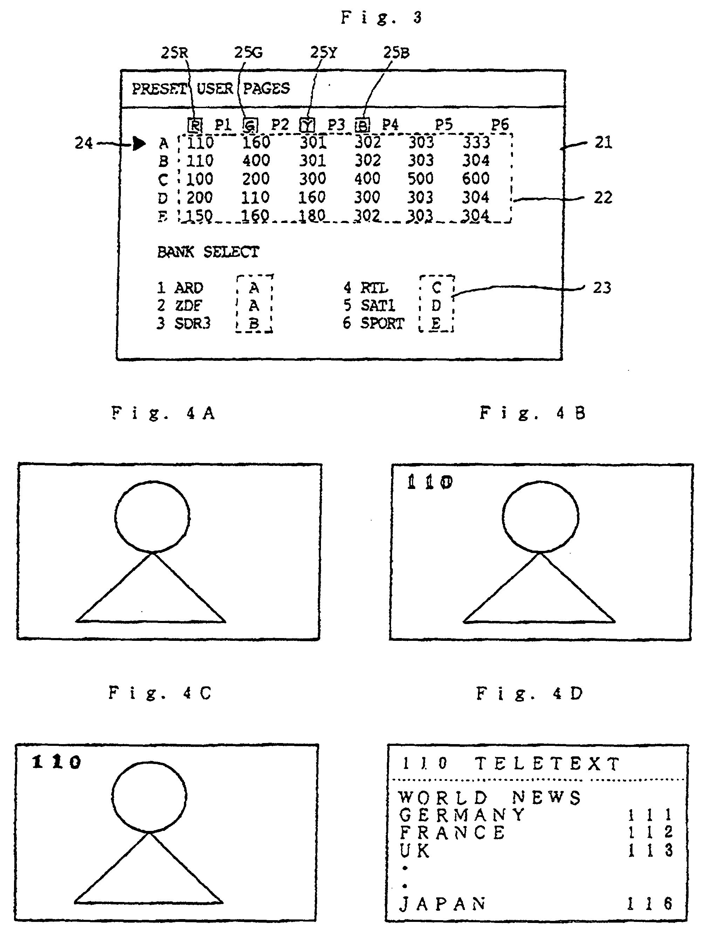

If the item "preset user pages" is selected on the teletext menu, a preset table 21 as shown in Fig. 3 is displayed. The preset table 21 includes a user page preset area 22 and a bank select area 23. In the user page preset area 22, 6 page numbers of 6 teletext pages per one bank, for example in this embodiment, can be preset as user pages P1 to P6 which will be frequently watched.

while the user is free to preset any desired page numbers in the user page preset area 22, it is more convenient to assign the respective user pages P1 to P6 for respective pages containing teletext of certain categories which are frequently watched, for example, weather, news, current program, etc.. Since some stations transmit teletext of same category under same page number and some stations, however, may transmit teletext of same category under different page number, respective station can be classified into a certain number of groups each including stations which use same page number for same category. For this purpose, the preset table 21 provides the user page preset area 22 with, for example, 5 banks A to E, each of which can be assigned for each of such groups. In this respect, after page numbers up to 6 pages with regard to each bank are preset in the user page preset area 22, each suitable one from the 5 banks A to E is assigned to each station on the bank select area 23.

In the "preset user pages" table, a cursor 24 can be moved by manipulating the cursor up/down key 18. First of all, one of the banks A to E can be selected by pointing it with the cursor 24 and then depressing the OK key 19. After the desired bank is selected, 3 digits representing a desired teletext page'for each of the user pages P1 to P6 can be entered one by one in the user page preset area 22 of the selected bank. If a first page number for the user page P1 is input by depressing 10 keys 15 or the program up/down key 16, the input page number is entered by depressing the OK key 19. Then a second page number for the user page P2 can be entered in the same manner. After all 6 page numbers are entered in the same bank and the OK key 19 is depressed, the cursor 24 goes back to point the next bank.

By moving the cursor 24 to point the item "Bank select" and depressing the OK key 19, The cursor 24 is shifted to the bank select area 23. One of the program numbers can be then selected by manipulating the cursor up/down key 18 to point one of the program numbers and depressing the OK key 19. In one of the bank select area 23, desired one of the bank symbols A to E can be input by manipulating the program up/down key 16 and then entered by depressing the OK key 19. After preset all desired data are entered, these preset data are stored in the teletext processor 7 by depressing the OK key 19.

If the item "user pages" is selected from the teletext menu after the teletext mode is selected and the teletext menu is displayed, the user pages menu (not illustrated) is displayed as an index of the user pages P1 to P6 together with a cursor. Accordingly, the user can select one of the user pages P1 to P6 from the user pages menu. This function provides the user with very quick access to a desired page. However, it is still necessary for the user to select the teletext mode first in order to watch a desired teletext page.

According to the invention, at least one user page of teletext can be retrieved by operating one of operation keys of the television receiver 1 or the remote controller 10 during TV mode. in this embodiment, 4 user pages out of 6 user pages P1 to P6 are made to be related to 4 colored keys 20R, 20G, 20Y and 20B for TOP teletext function on the remote controller 10. In this connection, in order to make it easy for the user to preset the page numbers of the user pages related to the colored keys 20R, 20G, 20Y and 20B, color marks 25R, 25G, 25Y and 25B with same 4 colors as that of 4 colored keys 20R, 20G, 20Y and 20B are displayed near the indications "P1" to "P4" above the user page preset area 22.

Having preset 4 page numbers of the user pages per bank, the user can access directly the preset user pages by operating one of 4 colored keys 20R, 20G, 20Y and 20B during TV mode. Therefore, it is not necessary for the user to select the teletxt mode before selecting a desired page number.

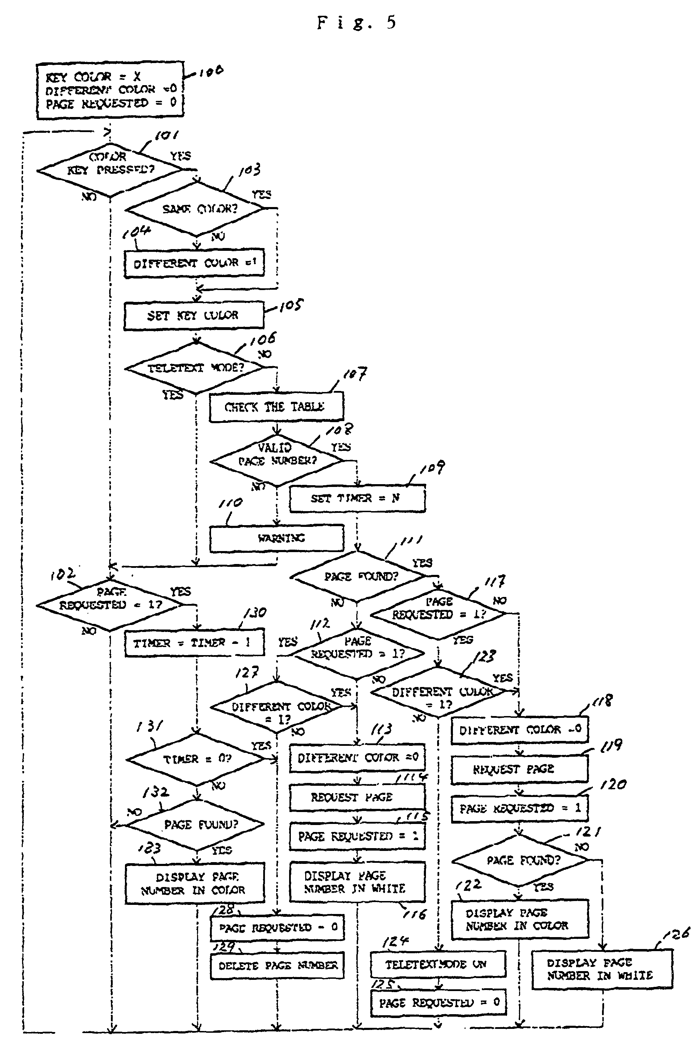

Referring to Figs. 4A to 4D and Fig. 5, the transaction of the user pages mode according to the invention will. be explained in detail. If TV mode is selected by pressing TV ON key 13 and a certain program is selected by pressing the 10 keys 15 or the program up/down key 16, A normal video picture of the selected program is displayed on the screen of the display device 6 as shown in Fig. 4A. The preset bank corresponding to the selected program is checked at the preset data entered in the "preset user pages" table and acquisition of the teletext data of at least the teletext pages preset as the user pages related to 4 colored keys 20R, 20G, 20Y and 20B from the teletext data signal transmitted in the selected program are started according to the preset data entered in the "preset user pages" table.

Meanwhile, a flag "KEY COLOR" is set into "X", a flag "DIFFERENT COLOR" is set into "0" and a flag "PAGE REQUESTED" is set into "0" as the inituial status, respectively in the step 100. In the step 101, it is checked whether any one of the colored keys 20R, 20G, 20Y and 20B is depressed. If not, in the step 102, it is checked whether "PAGE REQUESTED" is "1". If not, the step 100 is repeated. If any one of the colored keys 20R, 20G, 20Y and 20B is depressed, the color of the depressed key 20 is compared with the value of the flag "KEY COLOR" in the step 103. "X" means "do not care" and it is judged that the color is same. If it is judged that the color is different, the flag "DIFFERENT COLOR" is set into "1" in the step 104 as explained late. In the step 105, the flag "KEY COLOR" is set into the color value corresponding to the depressed colored key 20. For example, if the red key 20R is depressed, the flag "KEY COLOR" is set into "R" and so on.

In the step 106, it is judged whether the teletext mode is selected. If the program providing a signal including a teletext signal, for example, not only a transmitted normal television signal but also a television signal reproduced from a video tape recorder and provided to an auxiliary input terminal of the TV receiver 1 (though not ilustrated in Fig. 1), is selected, this condition is also judged as TV mode. Other than such conditions is judged as teletext mode.

If teletext mode is selected, the step 101 is repeated after the step 102. If it is judged as TV mode, the preset data is examined in the step 107. In the step 107, the bank of user page numbers corresponding the selected program is checked and the user page number data corresponding the depressed color key 20 in the selected bank is checked. If the user page number data is confirmed as a valid page number (at least 3 digits and preferably 3 digits possible as a teletex page) in the step 108, a timer is set into a certain time N in the step 109. If the user page number data is judged as invalid data, it is possible to indicate a warning message on the screen of the display device 6 in the step 110.

After the timer is set in the step 109, it is checked in the step 111 whether the teletext page data of the user page number checked in the step 108 have beer already acquired from the television signal and stored in the teletext processor 7 or the memory 8. If not found, it is checked in the step 112 whether the flag "PAGE REQUESTED" is set into "1". If not, the flag "DIFFERENT COLOR" is set into "0" in the step 113 and the teletext data of the requested user page number is acquired from the television signal in the step 114 and, if acquired, the acquired data is stored in a certain area of the memory in the teletext processor 7 or the memory 8, which area is used to store the teletext data to be displayed on the screen of the display device 6 immediately after teletext mode is switched on. After that, the flag "PAGE REQUESTED" is set into "1" in the step 115 and the requested user page number is displayed in a white color on the screen of the display device 6 as shown in Fig. 4B in the step 116.

If yes in the step 111, namely if the teletext page data of the user page number checked in the step 108 have been already acquired from the television signal and stored in the teletext processor 7 or the memory 8, the flag "PAGE REQUESTED" is checked in the step 117. If the flag "PAGE REQUESTED" is set into "0", the flag "DIFFERENT COLOR" is set into "0" in the step 118, the stored teletext data is set in the certain area of the memory in the teletext processor 7 or the memory 8 in the step 119 and the flag "PAGE REQUESTED" is set into "1" in the step 120. In the step 121, it is checked again whether the requested user page is found. This step 121 is superfluous in the above case and provided only for the case that a different color key is depressed as explained later.

If the requested user page is found in the memory, the requested user page number is displayed in the color corresponding to the depressed colored key 20 on the screen of the display device 6 in the step 122 as shown in Fig. 4C. If the page number has been already displayed in the white color, the color is changed into the color corresponding to the depressed colored key 20.

If the user wants to really watch the request user page, the same colored key 20 should be depressed again in this embodiment, though it is not always necessaryto do so in principle. If the same colored key 20 is depressed again, after the steps 101, 103, 105, 106, 107, 108, 109, 111, 117 are performed, the flag "DIFFERENT COLOR" is checked in the step 123. If the flag "DIFFERENT COLOR" is set "0", teletext mode is switched on in the step 124 and the teletext picture is displayed on the screen of the display device 6 as shown in Fig, 4D according to the teltext data stored in the certain area of the memory in the teletext processor 7 or the memory 8. Then the flag "PAGE REQUESTED" is set into "0" again in the step 125.

The user can change the requested user page even after a colored key 20 is depressed once by depressing another colored key 20. If another colored key 20 is depressed, the color of the colored key 20 depressed this time is compared with the color of the previously depressed colored key 20 in the step 103. If there is difference in color, the flag "KEY COLOR" is set into new color code in the step 105. After the steps 106, 107, 108, 109 are performed, if the newly requested user page is found in the step 111, the flag "DIFFERENT COLOR" is checked in the step 123 after the step 117 is performed. Since the flag "DIFFERENT COLOR" has been already set into "1" in this case, after the flag "DIFFERENT COLOR" is set into "0" again, and the steps 119, 120 are performed, if the requested user page is found, the step 122 is performed, and if not, the requested user page number is displayed in the white color on the screen of the display device 6 as shown in Fig. 4B in the step 126.

If the newly requested user page is not found in the step 111, the flag "PAGE REQUESTED" is checked in the step 112. Since the flag "PAGE REQUESTED" has been se t into "1" already in this case, the flag "DIFFERENT COLOR" is checked in the step 127, which also has been already set into "1" in this case. Then the flag "DIFFERENT COLOR" is set into "0" again in the step 113 and the steps 114 is performed.

If the user want to cancel the user page request, the same colored key 20 is depressed but only before the requested user page is found or only while the requested user page number is displayed in the white color on the screen of the display device 6. If the same colored key 20 is depressed in that timing, after steps 101, 103, 105, 106, 107, 108, 109, 111, 112 are performed, the flag "DIFFERENT COLOR" is checked in the step 127, the flag "PAGE REQUESTED" is set into "0" again in the step 128 and the requested user page number displayed in white on the screen of the display device 6 is deleted in the step 129.

If the colored key 20 is not depressed twice within the certian time N, the user page request is also cancelled. Therefore, if it is judged in the step 102 that the flag "PAGE REQUESTED" is set into "1", the timer is counted down by "1" in the step 130. If it is judged in the step 131 that the timer becomes "0", the user page request is cancelled in the steps 128 and 129. If timer is not "0" and the request user page is found in the step 132, the requested user page number is displayed in the white color on the screen of the display device 6 in the step 133.

In the above embodiment, 4 colored key 20R, 20G, 20Y and 20B for TOP teletext are used for requesting the user pages. However, any operation members which are not used during TV mode can be used for this purpose, in principle.

An an variation, the user pages can be tentatively or permanently preset in the manufacturing process of the TV receiver 1.

## Claims

1. A television receiver comprising:
signal input circuit means (2, 3, 4, 5) for receiving a signal including a video picture signal and a teletext data signal;
teletext signal processor means (7) for decoding the teletext data signal, obtaining teletext data and generating a teletext picture according to the obtained teletext data;
display means (6) for displaying the video picture and/or teletext picture on a screen thereof according to the video picture signal and teletext picture signal; and
control means (10, 11, 12) including operation members (20G, 20R, 20Y, 20G) for controlling the television receiver;
**characterized in that**
at least one of said operation members is assigned to a selected teletext page number which was previously preset to a memory bank, said bank being assignable to a selected television station or to two or more stations which use the same teletext page number for teletext data of the same category, whereby if said operation member is manipulated while the video picture signal of a television station corresponding to said bank is currently displayed on the screen of said display means (6), then the teletext picture, of the teletext data of said television channel, bearing said selected teletext page number to which said operation member is assigned is displayed on the screen of said display means (6).

2. A television receiver as claimed in claim 1, wherein said operation members are otherwise used for controlling TOP or FLOP teletext function.

3. A television receiver as claimed in claim 1 or 2, wherein a user of the television receiver need not select the teletext mode manually when manipulating said operation member and can watch the video picture while the teletext page bearing said selected teletext page number is searched, up until that page is found and displayed.

## Patentansprüche

1. Fernsehempfänger mit:
- Signaleingangskreiseinrichtungen (2, 3, 4, 5) zum Empfangen eines Signals, welches ein Videobildsignal und ein Teletextdatensignal enthält,
- einer Teletextsignalprozessoreinrichtung (7) zum Decodieren des Teletextdatensignals, zum Erhalten von Teletextdaten und zum Erzeugen eines Teletextbildes gemäß den erhaltenen Teletextdaten,
- eine Anzeigeeinrichtung (6) zum Anzeigen des Videobildes und/oder des Teletextbildes auf einem Anzeigeschirm davon gemäß dem Videobildsignal und dem Teletextbildsignal und
- Steuereinrichtungen (10, 11, 12) mit Betriebselementen (20G, 20R, 20Y, 20G) zum Steuern des Fernsehempfängers,
**dadurch gekennzeichnet,**
**dass** mindestens eines der Betriebselemente einer ausgewählten Teletextseitenzahl zugeordnet ist, welche zuvor in einer Speicherbank voreingestellt wurde, wobei die Speicherbank einer ausgewählten Fernsehstation oder zwei oder mehr Stationen, welche dieselbe Teletextseitenzahl für Teletextdaten derselben Kategorie verwenden, zuordenbar ist, wodurch, wenn das Betriebselement betätigt wird, während das Videobildsignal einer mit der Speicherbank korrespondierenden Fernsehstation gerade auf dem Anzeigschirm der Anzeigeeinrichtung (6) angezeigt wird, das Teletextbild der Teletextdaten des Fernsehkanals, welches die ausgewählte Teletextseitenzahl trägt, zu welcher das Betriebselement zugeordnet ist, auf dem Anzeigeschirm der Anzeigeeinrichtung (6) angezeigt wird.

2. Fernsehempfänger nach Anspruch 1, bei welchem die Betriebselemente anderweitig zum Steuern der TOP- oder FLOP-Teletextfunktion verwendet werden.

3. Fernsehempfänger nach einem der Ansprüche 1 oder 2, bei welchem ein Benutzer des Fernsehempfängers den Teletextmodus nicht manuell auswählen muss, wenn er das Betriebselement betätigt, und bei welchem der Benutzer das Videobild anschauen kann, während die Teletextseite, welche die ausgewählte Teletextseitenzahl trägt, gesucht wird, bis die Seite gefunden und angezeigt wird.

## Revendications

1. Récepteur de télévision comprenant :
des moyens de circuit d'entrée de signal (2, 3, 4, 5) destinés à recevoir un signal comprenant un signal d'image vidéo et un signal de données de télétexte,
un moyen de processeur de signal de télétexte (7) destiné à décoder le signal de données de télétexte, obtenir des données de télétexte et générer une image de télétexte conformément aux données de télétexte obtenues,
un moyen d'affichage (6) destiné à afficher l'image vidéo et/ou l'image de télétexte sur un écran de celui-ci conformément au signal d'image vidéo et au signal d'image de télétexte, et
des moyens de commande (10, 11, 12) comprenant des éléments de commande (20G, 20R, 20Y, 20G) destinés à commander le récepteur de télévision,
**caractérisé en ce que**
au moins l'un desdits éléments de commande est affecté à un numéro de page de télétexte sélectionné qui a été précédemment préétabli à un bloc de mémoire, ledit bloc pouvant être affecté à une station de télévision sélectionnée ou à deux ou plusieurs stations qui utilisent le même numéro de page de télétexte pour des données de télétexte de la même catégorie, d'où il résulte que si ledit élément de commande est manipulé tandis que le signal d'image vidéo d'une station de télévision correspondant audit bloc est actuellement affiché sur l'écran dudit moyen d'affichage (6), alors l'image de télétexte, des données de télétexte dudit canal de télévision, portant ledit numéro de page de télétexte sélectionné auquel ledit élément de commande est affecté, est affichée sur l'écran dudit moyen d'affichage (6).

2. Récepteur de télévision selon la revendication 1, dans lequel lesdits éléments de commande sont par ailleurs utilisés en vue de commander la fonction de télétexte TOP ou FLOP.

3. Récepteur de télévision selon la revendication 1 ou 2, dans lequel un utilisateur du récepteur de télévision n'a pas besoin de sélectionner le mode de télétexte manuellement lors de la manipulation dudit élément de commande et peut regarder l'image vidéo tandis que la page de télétexte portant ledit numéro de page de télétexte sélectionné est recherchée, jusqu'à ce que cette page soit trouvée et affichée.
